# EUROPÄISCHE PATENTSCHRIFT

(11) **EP 0 772 132 B1**
(45) Veröffentlichungstag und Bekanntmachung des Hinweises auf die Patenterteilung: **18.12.2002**
(21) Anmeldenummer: 96113714.8
(22) Anmeldetag: 28.08.1996
(51) Int. Cl.: G06F 13/40, H01R 9/24, H02G 3/16

(54) **Aktor/Sensor-Kombination für die Gebäudesystemtechnik**
Actor/sensor-assembly used in building system technics
Assemblage acteur/capteur pour le système technique de construction

(30) Priorität: 04.11.1995 DE 19541154
(43) Veröffentlichungstag der Anmeldung: 07.05.1997
(73) Patentinhaber: INSTA ELEKTRO GmbH & Co. KG, 58468 Lüdenscheid (DE)
(72) Erfinder: Neumann, Udo, Dipl.-Ing., 58579 Schalksmühle (DE); Wegerhoff, Ralf, Dipl.-Ing., 58553 Halver (DE); Stecura, Darius, Dipl.-Ing., 45739 Oer-Erkenschwick (DE); Donat, Norbert, Dipl.-Ing., 58553 Halver (DE)

(56) Entgegenhaltungen:
- EP-A- 0 551 649
- DE-A- 4 013 815
- DE-A- 4 216 242
- DE-A- 4 225 326
- FR-A- 2 697 382
- US-A- 4 985 845

## Beschreibung

Die Erfindung betrifft eine Aktor/Sensor Kombination für Bussysteme der Gebäudesystemtechnik gemäß dem Oberbegriff des Anspruchs 1.

In der Gebäudesystemtechnik sind Geräte, auch Busteilnehmer genannt, über eine Busleitung verbunden. Die Busleitung besteht aus einer Zweidrahtleitung oder Netzleitung, auf die Bussignale aufgeprägt werden. Die Busteilnehmer sind dabei in Sensoren, Aktoren und andere Teilnehmer unterteilt. Mit Sensoren werden Busteilnehmer bezeichnet, die eine physikalische Größe in ein Bustelegramm umwandeln und auf den Bus senden. Mit Aktoren werden Busteilnehmer bezeichnet, die Telegramme empfangen und in Aktionen umsetzen. Eine Funktion wird in der Gebäudesystemtechnik durch die Tastsensoren und Aktoren realisiert, indem der Tastsensor den Betätigungsdruck des Bedieners erkennt, ein entsprechendes Telegramm auslöst, das Telegramm über den Bus gesendet wird, der Aktor das Telegramm empfängt und es in eine Steuerhandlung seines Leistungsteils umsetzt. Der Aufbau von Busteilnehmern besteht aus dem Busankoppler, dem Anwendungsmodul und der Anwendungssoftware. Für die Funktion muss das Telegramm mit Hilfe von zwei Busankopplern verarbeitet werden, nämlich ein Busankoppler im Sensor und ein Busankoppler im Aktor. Die Kosten von zwei Busankopplern sind dabei recht hoch und werden von den Kunden kaum akzeptiert.

Durch die FR-A-2 697 382 ist eine dem Oberbegriff des Hauptanspruches entsprechende Aktor/Sensor Kombination bekannt geworden. Bei dieser Aktor/Sensor Kombination ist zu dessen Aufnahme eine speziell ausgebildete Unterputzinstallationsdose notwendig. Um den Busankoppler in der Unterputzinstallationsdose festzulegen, wird zunächst ein zusätzlicher Montagebügel in die Unterputzinstallationsdose eingebracht. Zur Aufnahme der mit den Bedienelementen zu versehenen Kommunikationsteilen und gegebenenfalls Ergänzungsteilen ist nochmals ein zusätzlicher Tragrahmen notwendig, der am Montagebügel festgelegt wird. Wird der Tragrahmen nicht gänzlich mit Kommunikationsteilen und Ergänzungsteilen bestückt, werden außerdem Blindteile notwendig, um die sonst verbleibenden Lücken zu schließen. Letztendlich ist bei einer solchen Aktor/Sensor Kombination eine speziell ausgebildete Abdeckung notwendig, um einen ansehnlichen optischen Gesamteindruck zu erzielen. Alles in allem ist eine solche Aktor/Sensor Kombination sowohl bezüglich ihrer Produktion, als auch bezüglich ihrer Montage aufwendig und damit entsprechend teuer.

Des weiteren ist durch die DE 42 25 326 A1 eine Aktor/Sensor Kombination bekannt geworden, deren Komponenten in zwei Unterputzinstallationsdosen zu montieren sind. Dabei ist eine Anschlussvorrichtung vorgesehen, über die eine Verbindung mit einem Bussystem der Gebäudesystemtechnik ermöglicht wird.

Außerdem ist durch die EP 0 551 649 A2 ein Verteiler für elektrische Installationssysteme bekannt geworden. Dieser Verteiler für ein elektrisches Installationssystem ist zur gleichzeitigen Energieübertragung sowie zur Steuerung der angeschlossenen Verbraucher über eine Datenleitung mit serieller digitaler Datenübertragung (Busteitung) vorgesehen. Dabei werden die Steuerinformationen über Bus-Koppler von der Bus-Leitung abgenommen und zum Schalten der Leistungsversorgung für die jeweiligen Verbraucher genutzt. Wobei die mit Steckverbindern zum Einschalten in die Stromversorgungsleitung und die Bus-Leitung versehenen Verteiler mit eingebauten Bus-Kopplern und von diesen angesteuerten, in einem Stromversorgungsabzweig liegenden Schaltgliedem, sowie mit nachgeordneten Ausgangssteckverbindern für eine herkömmliche Versorgungsverdrahtung zu den Verbrauchern versehen sind.

Des weiteren sind Aktor/Sensor Kombinationen heute vornehmlich in den Bauformen für Verteilungseinbau oder für Aufputzmontage ausgeführt. Daneben gibt es auch Aktor/Sensor Kombinationen, die in eine handelsübliche Unterputzinstallationsdose einsetzbar sind. Solche Aktor/Sensor Kombinationen bestehen vornehmlich aus einem Anwendungsmodul als Leistungsteil und einem Busankoppler. Der Busankoppler für Unterputzinstallation füllt eine Unterputzdose aus, so daß sein Anwendungsmodul mit dem Relais in eine zweite Unterputzdose montiert werden muß und damit den Aktor bildet. Die so jeweils einzeln in eine separate Unterputzdose eingesetzten Leistungsglieder und Busankoppler sind über eine Leitungsverbindung vom Leistungsglied auf eine Steckbuchse des Busankopplers geführt. Die Steckbuchse des Busankopplers ist eine weitverbreitete Vorschrift der EIBA (European Installation Bus Association). Damit ist die Steckbuchse des Busankopplers belegt und kann nicht für andere Anwendungsmodule wie Sensoren benutzt werden. Beide Unterputzdosen müssen verschlossen werden und erhalten deshalb eine Blindabdeckung; sie ist also nicht mehr bedienbar. Außerdem werden solche Blindabdeckungen in einem Gebäude als unästhetisch empfunden. Der zugehörige Stecker zur Steckbuchse des Busankopplers, der zum Leistungsglied führt, ragt mit seinen Leitungen über die Ebene der Unterputzdosen heraus, so daß zu deren Leitungsführung In die benachbarte Unterputzdose, die Abdeckrahmen mit Ausnehmungen versehen sein müssen. Zu der Installation dieser Geräte muß daher ein spezieller Abdeckrahmen bei den Herstellern, Großhändlern und Installateuren gelagert werden, was die Artikelanzahl erhöht.

Der vorliegenden Erfindung liegt daher die Aufgabe zugrunde, busfähige Geräte der gattungsgemäßen Art so weiter zu entwickeln, daß sie gegenüber dem Stand der Technik folgende Forderungen erfüllen:
1.) Die busfähigen Geräte müssen vor Ort bedienbar sein.
2.) Sie müssen für aufsteckbare Bedienteile geeignet sein, die mit elektronischen Schaltungen und elektrisch ansteuerbaren Anzeigemitteln versehen sind.
3.) Die aufsteckbaren Bedienteile müssen galvanisch von der Netzleitung getrennt sein.
4.) Die busfähigen Installationsgeräte mit einem Leistungsteil oder mehreren Leistungsteilen müssen für unterschiedliche Gebrauchszwecke geeignet sein.
5.) Die busfähigen Installationsgeräte müssen mit handelsüblichen und gebräuchlichen Abdeckrahmen nutzbar sein.

Diese Aufgabe wird durch die in Anspruch 1 gekennzeichneten Merkmale gelöst. Vorteilhafte Weiterbildungen sind in den Unteransprüchen angegeben. Anhand der Zeichnungsfiguren werden nachfolgend die Erfindung und dazu weitere vorteilhafte Ausgestaltungen näher erläutert. Es zeigt:
- Fig. 1: den prinzipiellen Aufbau einer Sensor/Aktor-Kombination in Unterputzinstallationsdosen;
- Fig. 2: eine Sensor/Aktor-Kombination gemäß Figur 1, jedoch erweitert um ein zweites Leistungsteil;
- Fig. 3: eine Ausführungsform des Aktor-Busankopplers in einer Abzweig-Schalterdose;
- Fig. 4: das Blockschaltbild eines Leistungsteiles.

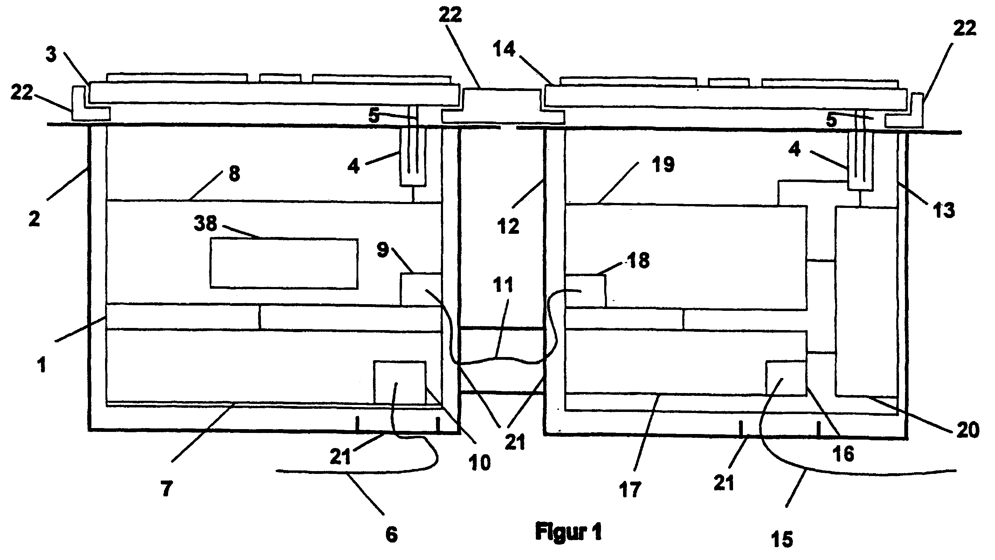

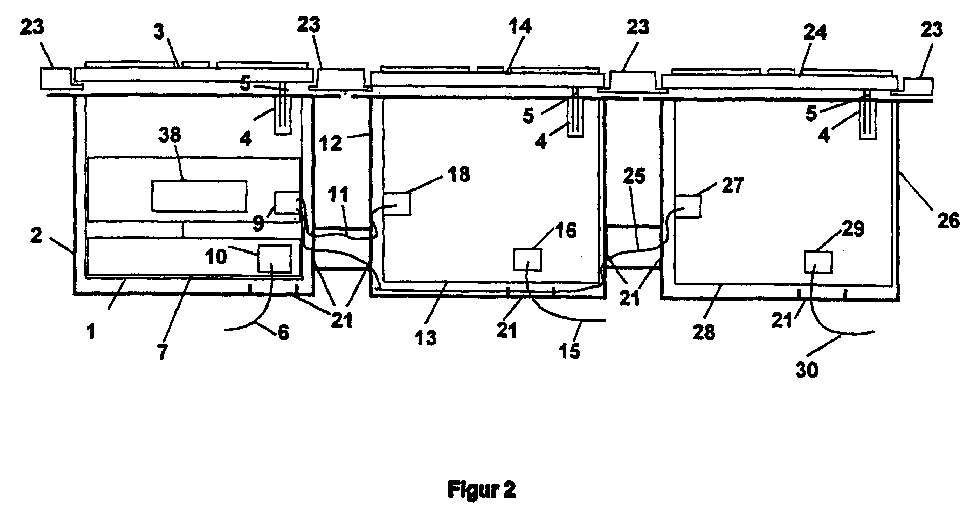

In den verschiedenen Zeichnungen sind gleiche Teile stets mit den gleichen Bezugszeichen versehen, so daß jede möglicherweise nur einmal unter Bezugnahme auf eine der Figuren vorkommende Beschreibung eines Teiles analog und auch bezüglich der anderen Zeichnungsfiguren gilt, in denen dies Teil mit entsprechenden Bezugszeichen ebenfalls zu erkennen ist. Fig. 1 zeigt den prinzipiellen Aufbau einer Aktor/Sensor-Kombination in Unterputzinstallationsdosen. Die Aktor/Sensor Kombination besteht aus zwei Unterputzeinsätzen, dem Busankoppler 1 und dem Leistungstell 13. Der Busankoppler 1 ist in eine handelsübliche erste Unterputzinstallationsdose 2 eingesetzt und über die Anschlußstelle 10 mit der Busleitung 6 verbunden. Der Aktor-Busankoppler 1 enthält eine Steckbuchse 4, in die die Stecker 5 eines Bedienteils 3 eingesteckt werden können. Der Busankoppler 1 versorgt das Bedienteil 3 mit Spannung. Die Bustelegramme werden von einer Busanpassung 7 übernommen und in einer Steuerung 8 mit einem Mikrocontroller 38 in der Weise weiterverarbeitet, daß Daten an das Bedienteil 3 über eine Anschlußstelle 9 mit der Verbindungsleitung 11 an das Leistungsteil 13 gegeben werden. Das Leistungsteil 13 übernimmt die Daten von der Anschlußstelle 18 in die Steuerung 19 und steuert das Leistungsglied 17 und das Bedienteil 14 über die Steckbuchse 4 an. Das Leistungsteil 13 ist über die Anschlußstelle 16 mit der Netzleitung 15 an das 230 V-Netz angeschlossen und die Spannungsversorgung 20 versorgt das Leistungsglied 17 und das Bedienteil 14 mit Spannung. Bedienungen an dem Bedienteil 3 werden von der Steuerung 8 über die Steckbuchse 4 erfaßt. Die Steuerung 8 kann nun entweder an das Leistungsteil 13 und/oder an die Busanpassung 7 Daten übergeben, so daß Telegramme auf die Busleitung 6 gesendet, Steuervorgänge in dem Leistungsglied 17 ausgelöst und/oder Daten an das Bedienteil 14 gegeben werden. Bedienungen an dem Bedienteil 14 werden von der Steuerung 19 über die Steckbuchse 4 erfaßt. Die Steuerung 19 kann nun entweder das Leistungsglied 17 ansteuern und/oder Daten an den Busankoppler 1 übergeben, so daß Telegramme auf die Busleitung 6 gesendet und/oder Daten an das Bedienteil 3 gegeben werden. Das Leistungsglied 17 kann ein Relais, Triac, Transistor oder ein anderes elektromechanisches oder elektronisches Bauteil sein. Damit können beispielsweise Schaltvorgänge, Dimmvorgänge oder Jalousiesteuerungen aufgebaut werden. Die Bedienteile 3, 14 sind handelsübliche Anwendungsmodule, wie sie heute für die Busankoppler 1 in Unterputzausführung benutzt werden. Die erste Unterputzinstallationsdose 2 und die zweite Unterputzinstallationsdose 12 sind handelsübliche Installationsdosen, durch deren Öffnungen 21 die Verbindungsleitung 11, die Busleitung 6 und die Netzleitung 15 geführt wird. Die Aktor/Sensor Kombination wird mit einem handelsüblichen Abdeckrahmen 22 montiert. Es sind daher keine speziellen Installationsdosen und Abdeckrahmen erforderlich. Fig. 2 zeigt eine Aktor/Sensor Kombination mit einem zweiten Leistungsteil 28, wobei die Aktor/Senor Kombination der Fig. 1 um das zweite Leistungsteil 28 erweitert wurde. Es ist über die Anschlußstelle 27 mit der Verbindungsleitung 25 durch die Öffnungen 21 der ersten Unterputzinstallationsdose 2 und der zweiten Unterputzinstallationsdose 12 zu der Anschlußstelle 9 des Busankopplers 1 geführt. Das zweite Leistungsteil 28 ist dabei wiederum in eine handelsübliche zweite bzw. weitere Unterputzinstallationsdose 26 montiert und ein Bedienteil 24 ist mit dem zweiten Leistungsteil 28 verbunden. Die Netzleitung 30 wird durch die Öffnung 21 in der Anschlußstelle 29 mit dem zweiten Leistungsteil 28 verbunden. Ein handelsüblicher Abdeckrahmen 23 dient der Installation der Aktor/Sensor Kombination.

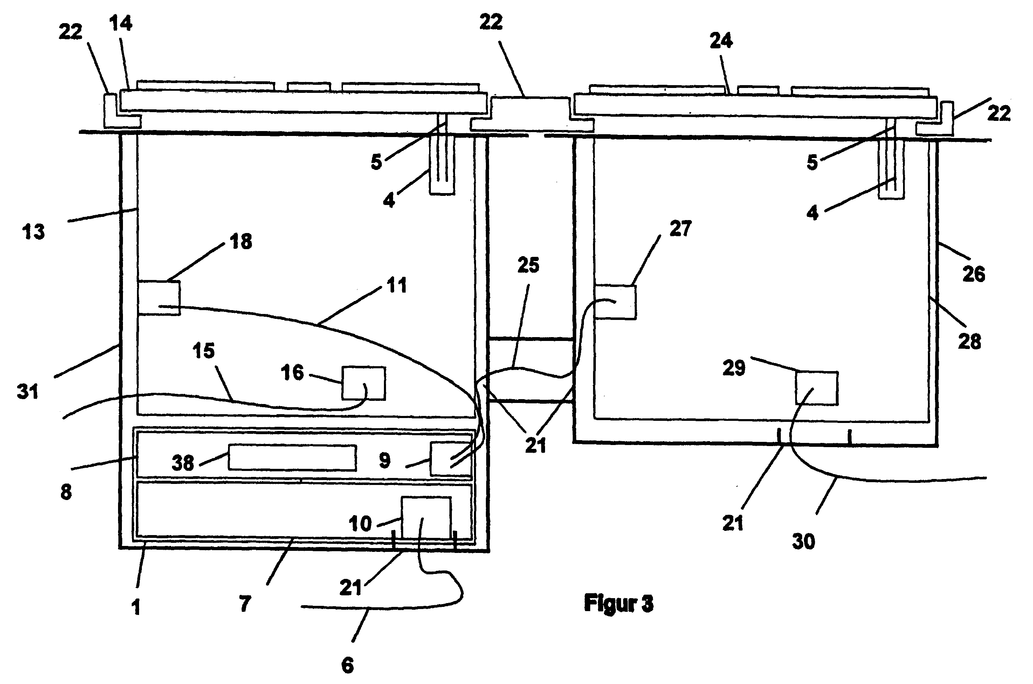

Bedienungen an den Bedienteilen 3, 14 und 24 werden von dem Busankoppler 1 erfaßt und die entsprechenden Daten werden an die Busleitung 6 weitergegeben und/oder es werden Steuervorgänge in dem Leistungsteil 13 und dem zweiten Leistungsteil 28 ausgelöst. Dabei erfolgt die Spannungsversorgung des Bedienteils 3 über den Busankoppler 1, während die Bedienteile 14 and 24 über das Leistungsteil 13 und das zweite Leistungsteil 28 versorgt werden. Fig. 3 zeigt eine weitere Ausführungsform des Busankopplers 1. Das Leistungsteil 13 und der Aktor-Busankoppler 1 sind in eine handelsübliche Abzweig-Schalterdose 31 mit Öffnungen 21 montiert. Die Busanpassung 7 und die Steuerung 8 bilden dabei den Busankoppler 1, der in der Anschlußstelle 10 mit der Busleitung 6 geführt durch die Öffnung 21 und in der Anschlußstelle 9 mit den Verbindungsleitungen 11, 25 verbunden ist und die Verbindung zu dem ersten Leistungsteil 13 und dem zweiten Leistungsteil 28 herstellt. Auf das erste Leistungsteil 13 und das zweite Leistungsteil 28 können wiederum Bedienteile 14 und 24 aufgesteckt und mit dem Abdeckrahmen 22 montiert werden. Das zweite Leistungsteil 28 ist in einer weiteren Unterputzinstallationsdose 26 befestigt und über die Anschlußstelle 29 mit der Netzleitung 30 verbunden, die durch die Öffnung 21 der weiteren Unterputzinstallationsdose 26 geführt ist. Das Leistungsteil 13 in der Abzweig-Schalterdose 31 ist über die Anschlußstelle 16 mit der Netzleitung 15 verbunden. Durch Bedienung an den Bedienteilen 14 und 24 oder durch Bustelegramme können unterschiedliche Abläufe in dem ersten Leistungsteil 13 und/oder dem zweiten Leistungsteil 28 oder in den Bedienteilen 14 und 24 ausgelöst werden.

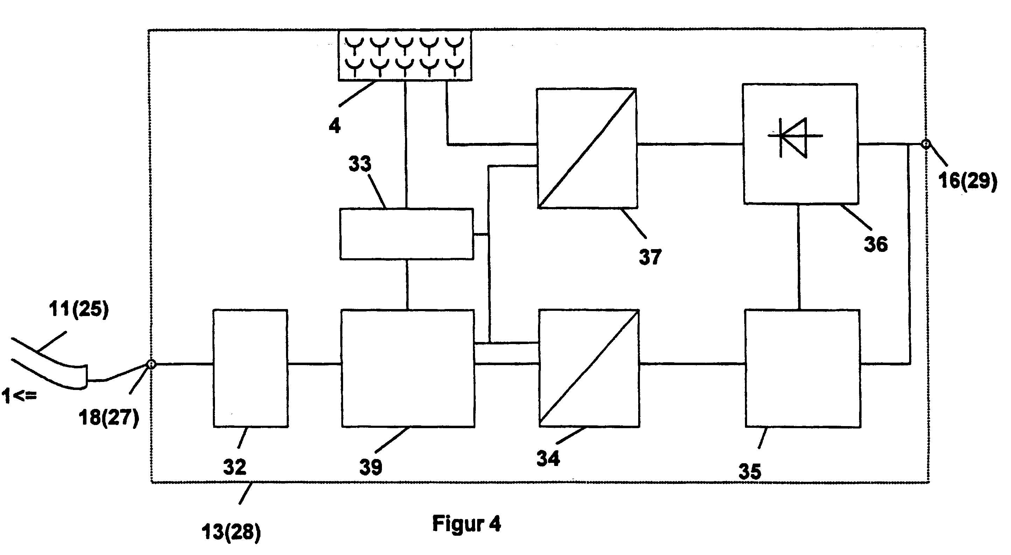

In Fig. 4 ist das Blockschaltbild eines ersten und zweiten Leistungsteils 13, 28 dargestellt, das über die Anschlußstelle 18, 27 über die Verbindungsleitung 11, 25 mit dem Busankoppler 1, über die Anschlußstelle 16, 29 mit der Netzspannung, verbunden ist. Auf die Steckbuchse 4 der Leistungsteile 13, 28 werden die Bedienteile 14, 24 entsprechend der Fig. 1 bis 3 aufgesteckt. Der Datenaustausch zwischen dem Busankoppler 1 und dem ersten Leistungsteil 13, sowie dem zweiten Leistungsteil 28 erfolgt mittels eines Mikrocontrollers 39 über die Anpassung 32. Dabei erfolgt der Datenaustausch mit dem jeweiligen Bedienteil 14, 24 und einem Mikrocontroller 39 über die Steckbuchsen 4 und über eine Anpassung 33. Der Mikrocontroller 39 gibt die Daten über eine erste galvanische Trennung 34 an das Leistungsglied 35 im Leistungsteil 13, und zweiten Leistungsteil 28 weiter, das einen nicht dargestellten Verbraucher ansteuert. Die Spannungsversorgung wird über eine Gleichrichtungseinheit 36 und eine zweite galvanische Trennung 37 der erreicht. Das Leistungsglied 35 kann dabei ausgebildet sein als Leistungstransistor, Triac, oder Relais und einmalig oder mehrmals angeordnet sein.

## Patentansprüche

1. Aktor/Sensor Kombination für Bussysteme der Gebäudesystemtechnik mit einem in einer ersten Unterputzinstallationsdose (2) untergebrachten Busankoppler (1) welcher mit einem Leistungsteil (13, 28) in Verbindung steht und standardisierte Steckbuchsen (4) zur Ankopplung von Bedienteilen aufweist, wobei zur Steuerung der Aktor/Sensor Kombination zumindest der Busankoppler (1) mit einem Mikrocontroller (38) ausgerüstet ist, **dadurch gekennzeichnet, dass**
a. zumindest ein Leistungsteil (13, 28) in einer zweiten Unterputzinstallationsdose (12) und/oder in einer weiteren Unterputzinstallationsdose (26) vorhanden ist, und
b. dass direkt am Busankoppler (1) eine weitere Anschlussstelle (9) für eine mit dem zumindest einem Leistungsteil (13, 28) in Verbindung bringbare Verbindungsleitung (11, 25) vorgesehen ist, und
c. dass das zumindest eine mit dem Busankoppler (1) in Verbindung stehende Leistungsteil (13, 28) zur Ankopplung von Bedienteilen ebenfalls mit standardisierten Steckbuchsen (4) versehen ist.

2. Aktor/Sensor Kombination nach Anspruch 1, **dadurch gekennzeichnet, dass** die erste Unterputzinstallationsdose (2) als Abzweigschalterdose (31) ausgebildet und zur Aufnahme eines Busankopplers (1) und eines Leistungsteiles (13) vorgesehen ist, und dass die Verbindung ausgehend von der Anschlussstelle (9) des Busankopplers (1) über die Verbindungsleitung (11) zur Verbindungsstelle (18) des Leistungsteiles (13) innerhalb der ersten Unterputzinstallationsdose (2) bzw. Abzweigschalterdose (31) vorgesehen ist, und dass das Bedienteil (14) über eine am Leistungsteil (13) vorhandene Steckbuchse (4) auf dieses aufsteckbar und mit dem Busankoppler (1) verbindbar ist.

3. Aktor/Sensor Kombination nach Anspruch 1 oder 2, **dadurch gekennzeichnet, dass** die Bedienteile (14,24) der Leistungsteile (13,28) über eine galvanische Trennung (37) und eine Gleichrichtungseinheit (36) etektrisch versorgbar sind.

4. Aktor/Sensor Kombination nach Anspruch 1, 2 oder 3, **dadurch gekennzeichnet, dass** ein Mikrocontroller (39) unter Anwendung einer galvanische Trennung (34) zur Ansteuerung der Leistungsglieder (35) der Leistungsteile (13,28) vorgesehen ist.

## Claims

1. Actuator/sensor combination for bus systems in building system engineering with a bus coupling unit (1) accommodated in a first flush-mounting box (2) and communicating with a power circuit (13, 28) and featuring standardized socket-contacts (4) for coupling operating elements, with at least the bus coupling unit (1) being equipped with a microcontroller (38) for controlling the actuator/sensor combination, **characterized by the fact that**
a) there is at least one power circuit (13, 28) in a second flush-mounting box (12) and/or in an additional flush-mounting box (26),
b) that an additional terminal device (9) is provided direct at the bus coupling unit (1) for an interconnecting cable (11, 25) which can communicate with the at least one power circuit (13, 28), and
c) that the at least one power circuit (13, 28) communicating with the bus coupling unit (1) is also equipped with standardized socket-contacts (4) for coupling operating elements.

2. Actuator/sensor combination in accordance with Claim 1, **characterized by the fact that** the first flush-mounting box (2) is designed as a branch-circuit switch box (31) and provided for accommodating a bus coupling unit (1) and a power circuit (13) and that the connection is intended to lead out from the terminal device (9) of the bus coupling unit (1) via the interconnecting cable (11) to the connecting point (18) of the power circuit (13) in the first flush-mounting box (2) or branch-circuit switch box (31) and that the operating element (14) can be plugged onto the power circuit (13) and can be connected to the bus coupling unit (1) by means of a socket-contact (4) on the power circuit (13).

3. Actuator/sensor combination in accordance with Claim 1 or 2, **characterized by the fact that** the operating elements (14, 24) of the power circuits (13, 28) can be supplied with electrical energy by means of a contact separation (37) and a rectifying unit (36).

4. Actuator/sensor combination in accordance with Claim 1, 2 or 3, **characterized by the fact that** a microcontroller (39) is provided which utilizes a contact separation (34) for triggering the drivers (35) of the power circuits (13, 28).

## Revendications

1. Combinaison acteur/détecteur pour des systèmes de bus dans des installations de domotique, comportant un coupleur de bus (1) logé dans un premier boîtier d'installation encastré (2) et connecté à un élément de puissance (13, 28), et comprenant des douilles d'enfichage standardisées (4) pour coupler des éléments de manipulation, au moins le coupleur de bus (1) étant équipé d'un microcontrôleur (38) pour commander la combinaison acteur/détecteur, **caractérisée en ce que**
a. au moins un élément de puissance (13, 28) est prévu dans un deuxième boîtier d'installation encastré (12) et/ou dans un autre boîtier d'installation encastré (26), et
b. un autre emplacement de branchement (9) est prévu directement sur le coupleur de bus (1) pour une ligne de connexion (11, 25) susceptible d'être connectée audit au moins un élément de puissance (13, 28), et
c. ledit au moins un élément de puissance (13, 28) susceptible d'être connecté au coupleur de bus (1) est également pourvu de douilles d'enfichage standardisées (4) pour coupler des éléments de manipulation.

2. Combinaison acteur/détecteur selon la revendication 1, **caractérisée en ce que** le premier boîtier d'installation encastré (2) est réalisé sous forme de boîtier commutateur de ramification (31) et est prévu pour recevoir un coupleur de bus (1) et un élément de puissance (13), et **en ce que** la connexion à partir de l'emplacement de branchement (9) du coupleur de bus (1) via la ligne de connexion (11) jusqu'à l'emplacement de connexion (18) de l'élément de puissance (13) est prévue à l'intérieur du premier boîtier d'installation encastré (2) ou du boîtier commutateur de ramification (31), et **en ce que** l'élément de manipulation (14) est susceptible d'être enfiché sur l'élément de puissance (13) via une douille d'enfichage (4) prévue sur ce dernier, et d'être connecté au coupleur de bus (1).

3. Combinaison acteur/détecteur selon l'une ou l'autre des revendications 1 et 2, **caractérisée en ce que** les éléments de manipulation (14, 24) des éléments de puissance (13, 28) sont susceptibles d'être alimentés en courant électrique via une séparation galvanique (37) et via une une unité de redresseur (36).

4. Combinaison acteur/détecteur selon l'une des revendications 1, 2 ou 3, **caractérisée en ce qu'**il est prévu un microcontrôleur (39) avec application d'une séparation galvanique (34) pour piloter les organes de puissance (35) des éléments de puissance (13, 28).
